(19) Europäisches Patentamt
European Patent Office
Office européen des brevets

(11) **EP 0 460 708 B1**

(12) **EUROPEAN PATENT SPECIFICATION**

(45) Date of publication and mention
of the grant of the patent:
**15.10.1997 Bulletin 1997/42**

(51) Int Cl.6: **G11B 7/24**, G11B 7/00

(21) Application number: **91111657.2**

(22) Date of filing: **28.05.1986**

(54) **Data storage device and method of data processing**

Datenaufzeichnungsgerät und Verfahren zur Datenverarbeitung

Appareil d'emmagasinage des données et méthode de traitement des données

(84) Designated Contracting States:
**DE FR GB NL**

(30) Priority: **08.07.1985 US 752742**
**28.08.1985 US 770137**
**20.08.1985 US 767441**
**18.10.1985 US 788899**

(43) Date of publication of application:
**11.12.1991 Bulletin 1991/50**

(60) Divisional application: **96117341.6**

(62) Document number(s) of the earlier application(s) in
accordance with Art. 76 EPC:
**86107254.4 / 0 208 118**

(73) Proprietor: **ENERGY CONVERSION DEVICES,
INC.**
**Troy Michigan 48084 (US)**

(72) Inventors:
• **Ross, Randall**
**Birmingham, MI 48010 (US)**
• **Bjornard, Erik**
**Concord, California 94521 (US)**
• **Hennessey, Michael**
**Detroit, Michigan 48219 (US)**

(74) Representative:
**Müller, Hans-Jürgen, Dipl.-Ing. et al**
**Müller, Schupfner & Gauger**
**Postfach 10 11 61**
**80085 München (DE)**

(56) References cited:
EP-A- 0 128 616          FR-A- 2 145 606
FR-A- 2 482 756

• APPLIED PHYSICS LETTERS. vol. 18, no. 6, 15
March 1971, NEW YORK US pages 254 - 257;
FEINLEIB ET AL: 'RAPID REVERSIBLE
LIGHT-INDUCED CRYSTALLIZATION OF
AMORPHOUS SEMICONDUCTORS'
• PROCEEDINGS OF SPIE "OPTICAL STORAGE
MEDIA" vol. 420, no. 27, 10 June 1983,
BELLINGHAM,WA.,USA pages 173 - 177;
TAKENADA ET AL.: 'New optical erasable
medium using tellurium suboxide thin film'

## Description

The invention relates to a method of writing data into and erasing data in a memory medium layer according to the opening part of claim 1.

US-A 3 778 785 describes a method according to which information can be written at high speed onto a memory material which is a semiconductor chalcogen memory material capable of changing from the crystalline state to the amorphous state. Information may be written and stored by exposing discrete portions of the memory material to a high speed pulsed laser wherein those exposed portions are converted from the crystalline to the amorphous state. The memory material of this type can be changed from the crystalline to the amorphous state by melting discrete portions of less than 5 µm in diameter of the crystalline material, the diameter being at least ten times larger than the thickness of the memory material layer. Erasing the information is carried out by raising the temperature to just less than the melt temperature so that recrystallization occurs upon cooling.

The state changeable materials are such that the detectable states made before in the morphology, surface topography, relative degree of order, relative degree of disorder, electrical properties, optical properties including indices of refraction and reflectivity, or combinations of one or more of these properties. This state of a state changeable material is detectable by the electrical conductivity, electrical resistivity, optical transmissivity, optical absorption, optical refraction, optical reflectivity, or combinations thereof.

Formation of date storage device of such time is usually a vacuum process including deposition of the individual layers, e.g. by evaporative deposition, chemical vapor deposition (CVD), and/or plasma deposition. As used herein plasma deposition includes sputtering, glow discharge, and plasma assisted chemical vapor deposition.

Tellurium based materials have been utilized as state changeable materials for data storage where the state change is a structural change evidenced by a change in reflectivity. This effect is described, for example, in J. Feinleib, J. deNeufville, S.C. Moss, and S.R. Ovshinsky, "Rapid Reversible Light-Induced Crystallization of Amorphous Semiconductors," Appl. Phys. Lett., Vol. 18(6), pages 254-257 (March 15, 1971), and in U.S. Patent 3,530,441 to S.R. Ovshinsky for Method and Oapparatus For Storing And Retrieving Of Information. A recent description of tellurium-germanium-tin systems, without oxygen, is in M. Chen, K.A. Rubin, V. Marrello, U.G. Gerber, and V.B. Jipson, "Reversibility And Stability of Tellurium Alloys for Optical Data Storage," Appl. Phys. Lett., Vol. 46(8), pages 734-736 (April 15, 1985). A recent description of tellurium-germanium-tin systems with oxygen is in M. Takenaga, N. Yamada, S. Ohara, K. Nishiciuchi, M. Nagashima, T. Kashibara, S. Nakamura, and T. Yamashita, "New Optical Erasable Medium Using Tellurium Suboxide Thin Film," Proceedings, SPIE Conference on Optical Data Storage, Arlington, VA, 1983, pages 173-177.

Tellurium based state changeable materials, in general, are single or multi-phased systems (1) where the ordering phenomena include a nucleation and growth process (including both or either homogeneous and heterogeneous nucleations) to convert a system of disordered materials to a system of ordered and disordered materials, and (2) where the vitrification phenomenon includes melting and rapid quenching of the phase changeable material to transform a system of disordered and ordered materials to a system of largely disordered materials. The above phase changes and separations occur over relatively small distances, with intimate interlocking of the phases and gross structural discrimination, and are highly sensitive to local variations in stoichiometry.

In chalcogen type memory materials the measures of performance include (1) the contrast ratio, that is, the difference in reflectivities of the states divided by the sums of the reflectivities of the states, and (2) the carrier to noise ratios of both (a) the "written" and (b) the "erased" states. The failure mode of the memory material is evidenced by the deterioration in the measures of performance with respect to the number of cycles. That is, failure may be evidenced by (1) a reduction in contrast ratio with increasing cycles, or by (2) a reduction in the written signal to noise ratio or an increase in the erased carrier to noise ratio. The exact mechanism for these failures have not heretofore been fully understood.

However, these failure modes have been identified with observable physical phenomena. For example, ring-like areas surrounding individual discrete regions of the memory medium which have been subjected to one or more write-erase cycles have been observed after static testing. Additionally, symmetric crescent shaped areas parallel to the information tracks on the memory medium and located at the edges of the cycled cells have been observed after dynamic testing. These ring-like and crescent shaped areas are believed to contain incompletely switched or cycled phase changeable material of mixed structure. The presence of areas of mixed structure is identified with a loss of material performance under dynamic conditions.

Another measure of performance is the ordering or erasing time. A serious limitation to the rate of data storage is a slow ordering or erasing time. Ordering or erasing occurs by the crystallization of vitrified or written spots. However, a layer of phase changeable material thin enough to provide first fringe reflection is so thin that vitrification or writing of the spot occurs substantially all the way through the layer. For most active layer compositions, when the spot crystallizes on erasure, it does so from the sides, where there is some unvitrified material to serve as nucleation sites. Thus, the erase time depends, in part, on the diameter of the spot.

Applied Physics Letters, 1971, pages 254-257, describes a data storage device comprising chalcogenide films being able to be switched from a first substantially ordered (e.g. crystalline) state to a second generally disordered (e.g. amorphous) state. That means the data storage device of this type is reversibly changeable between both states in order to write and read and erase, respectively, data into and out of the date memory layer. The speed of crystallization and reversibility should be high. The changing speed of the known material is on the order of microseconds. The range mentioned on page 254, left column, line 5/4, from the bottom is from 1 to 16 μsec. In a spot of about 3 μm in diameter using a peak intensity from 100 to 10 mW.

FR-A-2 482 756 and GB-A-2 079 031 describe a material which needs a time for recrystallization on the order of microsecond to milliseconds.

It is an object of the present invention to improve the switching speed, erasability and to promote the back crystallizing.

The invention is claimed in claim 1 and preferred embodiments are claimed in sub-claims.

The method of the present invention improves the switching speed, erasability, and overall performance of the optical device by one or more expedients which may be used singly or in combination. The reversibility is decreased so that a very unexpected high speed of less than 400 nsec is reachable.

The first approach uses a two component erase beam to provide more complete erasure. The second utilizes a relatively wide erase beam so as to concentrate more energy on the track edges and effect more complete erasure. The method can be used with a data storage device having an optically nontransmissive chalcogen data storage medium layer, a substrate supporting the medium, and dielectric films encapsulating the chalcogenide data storage medium. By "optically nontransmissive" is meant an optical transmissivity of less than approximately 5% in the non-ordered, or vitrified, state, The optical thickness of the chalcogenide layer should be thick enough to provide an optical transmissivity of less than 5% in the non-ordered or vitrified state.

The chalcogenide layer must also be thick enough that the projected beam energy does not vitrify the chalcogenide material all the way through the layer, but only through a top portion, which may be well-shaped. Thus, for energy pulses of comtemplated duration and energy density, the thermal thickness should be such to avoid vitrification all the way through the chalcogenide layer. Underneath the well of vitrified material is chalcogenide material in a crystallized or ordered state.

We have found that the depth of the vitrified spot of phase change material is typically three to ten times smaller then the diameter of the vitrified spot and that crystallization ratio is independent of spot size. Using this finding we have prepared devices with a thicker layer of phase change material then heretofore thought optimal. In this way we have been able to attain a significantly higher crystallization rate then that heretofore observed in similar chalcogenide films of 80 to 120 nm thickness. Microscopic examination of data storage devices with the herein contemplated thick chalcogenide films shows that this is accomplished by providing seeds or nucleation sites through a phenomenon we refer to as "back growth". By "back growth" we mean that crystals nucleate and crystallization proceeds from unvitrified chalcogenide material in the layer behind and adjacent to the vitrified chalcogen material but remote from the source of vitrifiying energy, i.e., that crystallization proceeds from a region below the vitrified spots.

As herein contemplated the thickness of the chalcogenide layer, that is, the layer of phase change material, must be thick enough that transient heat transfer from the vitrifying or writing pulse of projected beam energy out of the vitrified spot is low enough to avoid complete vitrification all the way through the layer. That is, the projected beam energy does not penetrate all the way through the layer of phase change chalcogenide material.

It is believed that crystallization proceeds from the state-state interface, i.e., the vitrified state-crystallized state interface, with the uncycled crystals serving as nucleation sites. Back growth proceeds much more quickly than the side growth of the prior art, because the axis of growth is perpendicular to the largest dimension of the spot size, instead of parallel to it. As herein postulated back growth proceeds through only about the 0,1 μm depth of the spot rather than through approximately 1 μm radius of the spot as in the case of side growth.

The invention herein contemplated provides self-alignment of the two states alonq the state-state or phase-phase interface. In the prior art crystallization proceeds through a layer-layer boundary. According to the present invention, crystallization proceeds through a phase-phase boundary of the same material, and new, growing crystals will be properly aligned with the unvitrified crystals. As a result, crystal growth is far less likely to exhibit undesirable patterning and concommitant residual signals upon erasure caused by irregularities in previous growth patterns.

It is believed that back growth results in better control of the size, orientation, volume fraction, and growth rate of the crystals. Thus, it is believed that the optically nontransmissive, crystalline, chalcogenide layer provides consistent, and even preferred orientations, and reduces the time for switching from the less ordered detectable state to the more ordered detectable state.

Moreover, it is believed that the invention reduces the cycle history dependent change in the order of the ordered material. This is because the seeds or nucleation sites are themselves not subject to cycling or state change and as a result the phase change material crystallizes consistently at each cycle. This results in a great improvement in stability and cycle history invariance.

Additionally, the thicker, optically nontransmissive chalcogen layer is internally reflecting. In the prior art, the thickness of approximately the thinner chalcogen layer had to have a thickness of Lambda/2n, where n was the index of refraction and Lambda the wave length in order to maximize contrast, i.e., minimize vitrified reflectivity and maximize crystallize reflectivity, where contrast equals $R_{crystalline}-R_{amorphous}$.

In the internally reflecting phase change material herein contemplated, incident light is reflected back from both the front (light incident) interface and the vitrified state-crystallized state interface, rather than from the chalcogenide layer-dielectric layer interface. Thus, thickness of the thick, optically nontransmissive layer may be fairly nonuniform as long as certain thicknesses, i.e., the thermal penetration thickness and the optical thickness are exceeded. By way of contrast the thin film chalcogenide structures of the prior art depend critically on the thickness of the active chalcogenide layer. The greater tolerance of layer thickness variation of the present invention results in far fewer manufacturing and quality control problems.

Because of the increase in crystallization rates due to the more favorable geometry of the thick layer structure, chalcogen compounds which are more stable and concomitantly have slower intrinsic switching times may be utilized and still yield good results. Under the prior art, a fast switching chalcogen, such as, for example, $Te_{83}Ge_5Sn_6O_{6-8}$, might be used. $Te_{83}Ge_5Sn_6O_{6-8}$, however, has a crystallization temperature of about 80°C. This relatively low crystallization temperature means that the material may be relatively unstable over time in the amorphous state. With the present invention, the fast switching time of the low crystallization temperatures thin layer material is obtained with a thicker layer of a compound such as $Te_{87-88}Ge_5Sn_6O_{3-4}$, which has a crystallization temperature of 100°C, and is, accordingly, more stable over time.

The method according to the invention is preferably used with a data storage device comprising a first substrate, a first dielectric layer deposited atop the substrate, and an optically nontransmissive chalcogen phase changeable data storage medium layer deposited atop the first dielectric layer. The optically nontransmissive, chalcogen, phase changeable, data storage medium layer has an ALPHA x D product greater then or equal to 3, where

$$T = TO\ EXP(-ALPHA \times D),$$

and

ALPHA = optical absorption coefficient,
D = active chalcogenide layer thickness,
T = transmitted light intensity, and
TO = intensity of light entering the active layer.

Deposited atop the layer of state changeable material may optionally be a second dielectric layer. With the herein contemplated thick chalcogenide layer structure, the second dielectric layer may be unnecessary. A second substrate is located atop that. The resultant device exhibits dynamic tester cycle-history invariance through more than at least 17,000 cycles with contrast of about 40 or more decibels, with complete erasability.

According to the invention herein contemplated, a projected beam energy is applied to the medium whereby to change a discrete portion of the medium, e.g., an individual cell in the medium from a solid state of first relative order to a solid state of second relative order, through a relatively high mobility intermediate state. Thereafter, projected beam energy is applied to the medium to change the same discrete portion of the medium from the state of second relative order to the state of first relative order, through a relatively high mobility intermediate state.

More specifically, the invention herein contemplated includes switching more ordered material, e.g., crystalline material, to less ordered material, e.g., amorphous material, through a relatively high mobility state, and from a less ordered material, e.g., amorphous material, to more ordered material, e.g., crystalline material, through a high mobility state. Both phase changes, e.g. from crystalline to amorphous, and from amorphous to crystalline, involve passing through a high mobility state characterized by a relatively low viscosity. The high mobility states may be the same state or different high mobility states. The phase transformations differ in thermal history, that is, in the quench rates and in the melt and quench temperature-time profiles.

The method contemplated includes vitrifying a cell of the memory medium from a relatively ordered state through a relatively high mobility state to a relatively disordered state. The contemplated invention also includes crystallizing the cell of memory medium from the relatively disordered solid state through a relatively high mobility state back to the relatively ordered solid state. The high mobility states may be the same or different high mobility states.

The method of the invention is carried out using a multicomponent beam to provide the desired melt-quench profiles. Data is written into the chalcogen memory medium, e.g., a discrete portion of the memory medium, with a relatively high energy short duration pulse of projected beam energy. Data is erased from the chalcogen memory medium, e.g., the discrete portion of the memory medium, with an energy beam having two components. One component is a relatively high energy short duration projected energy beam. The other component is a relatively low energy long duration projected energy beam component.

According to the method of the invention, the ordering or crystallization process is more complete and the deterioration both of the instantaneous and the cycle dependent carrier to noise ratios are reduced.

Significant degradation of the structure of the phase changeable material is most likely to occur as a result of the crystallization process. Crystallization requires the application of relatively long duration, relatively low energy density energy beams. These beams have a Gaussian energy distribution with respect to both time and geometry. The Gaussian energy distribution manifests itself in the degraded structure of the phase changeable material remote from the center line of the track. This degradation in the structure of the phase changeable material is associated with the corresponding observed degradation in the performance of the material after repetitive cycling, and is partly responsible for incomplete erasure problems.

According to the present invention, the incomplete erasure problem, evidenced by the observed degradation of edge structure within the memory medium and by loss of material performance, is obviated. The incompletely switched or cycled areas of mixed structure are believed to be related to a Gaussian energy distribution profile of the focused record and erase projected energy beams. More specifically, the state changeable material of the memory medium relies on differences in time-at-temperature of discrete areas to effect the write and erase processes. Thus, the temperature gradients across cycled areas of the memory medium create intermediate time-at-temperature histories, which may cause incomplete cycling, incomplete phase changes, or ill-defined boundaries between regions of phase changeable materials. This is referred to as degradation. Degradation alters the structure of the phase changeable material near the repeatively cycled areas.

According to a preferred embodiment, projected beam energy is applied to the medium to change a relatively narrow first track of the medium from a state of first relative order to a state of second relative order. Thereafter, projected beam energy is applied to the medium to change a second track of the medium which is sufficiently wider than and encompasses the relatively narrow first track from the state of second relative order to the state of first relative order. In this way, any areas of incompletely cycled memory medium contained within the wider second track are outside of the area of the narrow first track.

This method contemplates writing data into the memory medium with a relatively narrow beam width first energy pulse. The data is erased from the memory medium with a second energy pulse having a beam width wider than that of the relatively narrow beam width first energy pulse. In this way, any areas of incompletely cycled memory medium contained in a second track of the memory medium erased by the wider beam width second energy pulse lie substantially outside of the track of the memory medium written on by the narrow beam width first energy pulse.

In an alternative embodiment the method of the invention is carried out using a defocused energy pulse to effect erasure. Data is written into the memory medium with a substantially focused energy pulse. Data is erased from the memory medium with an energy pulse slightly defocused relative to said substantially focused energy pulse.

According to the method of the invention, the width of the erase track is sufficiently greater than that of the record track, whereby the areas of incompletely erased memory material occur substantially outside of the write-read track, yet the width is not great enough to impinge on adjoining tracks. Thus, the incomplete erasure problem caused by these areas of degraded cycled memory material is significantly reduced.

The data storage medium may be formed by depositing the materials to form a deposit thereof. The deposit may be more than 200 nm thick.

## THE DRAWINGS

The invention may be particularly understood by reference to the drawings appended hereto.

Figure 1 is a partial cut away isometric view, not to scale, with exaggerated latitudinal dimensions and vertical scale, of an optical data storage device.

Figure 2 is a detailed section of the part of the optical data storage device of Figure 1 showing the relationship of the various layers thereof.

Figures 3a and 3b shows the crystal growth patterns of an erased spot on a layer of chalcogenide data storage material formulated according to, respectively, the prior art and one embodiment invention herein contemplated.

Figures 4a and 4b represent, respectively erase times of the prior art and of one embodiment of the herein contemplated invention plotted against contrast at various record powers.

Figure 5 shows a data storage system.

Figures 6-10 are representations of five modes of the multicomponent projected beam energy.

Figures 11 and 12 are representations illustrative of the energy distribution profiles of energy beams. Figures 11 and 12 show the energy distribution as a function of area, temperature, and time, with area represented on horizontal axis, temperature on the vertical axis, and time on the third axis. Figure 11 represents the energy distribution profile of the prior art. Figure 12 represents the profile of the energy beam when the beam is defocused.

Figure 13 is a representation of a number of cells along one of the write-erase tracks of the data storage device.

## DETAILED DESCRIPTION OF THE INVENTION

The method according to the invention may be used with a projected beam storage device having a thick layer of data storage medium. The layer of medium is substantially optically non-transmissive and a portion thereof is switchable between detectable states by the application of projected beam energy thereto.

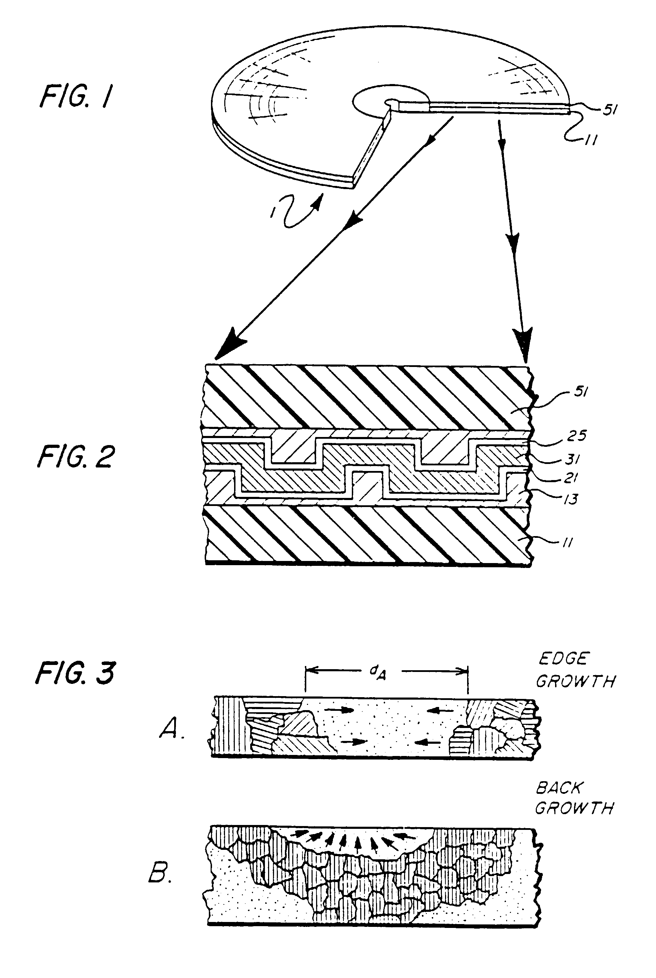

Figures 1 and 2 show a projected beam data storage device 1, having a substrate, for example a plastic substrate 11, a first encapsulating dielectric layer 21, for example a first germanium oxide encapsulating layer, a chalcogenide data storage medium layer 31, a second dielectric layer 41, e.g., a second germanium oxide layer 41, and a second substrate, e.g., plastic substrate 51.

The phase changeable material within the active layer 31 is a chalcogen composition containing a chalcogen, most preferably tellurium, a cross linking agent, and optionally other materials as oxygen, sulfur, selenium and tin.

The chalcogen is typically tellurium although other chalcogens, for example, selenium may be present therewith.

The cross linking agents are elements of groups III B, IV B, and V B of the Periodic Chart. Exemplary cross linking agents from groups III B, IV B, and V B include aluminum, indium, and gallium, of group III B, silicon, germanium, and tin, of group IV B, nitrogen, phosphorous, arsenic, antimony and bismuth of group V B and mixtures thereof. Most commonly the cross linking agents are germanium, and tin, with one or more of oxygen or nickel being present.

In one exemplification, the data storage medium 31 is substantially free of oxygen, the chalcogen is tellurium, and the cross linking agent is germanium either alone or with additional cross linking agents such as silicon, tin, arsenic, and or antimony. In an alternative exemplification, the chalcogen composition may include oxygen. When oxygen is absent, a switching modulator such as nickel may be present. The atomic ratio of cross linking agents to total composition is from 1 to about 20 atomic percent. The atomic ratio of switching modulator when present, is from about 1% to about 20% and preferably from 1% to about 10%. The amount of tellurium present is from about 70 to about 90 atomic percent. Additionally, the data storage medium may contain further additives, such as tin, with a ratio of additive to total composition from about 1 atomic percent to about 10 atomic percent.

Figure 2 shows a section of the data storage device 1 of Figure 1 in greater detail. As there shown, the substrate 11 is a polymeric sheet, for example a polymethyl methacrylate sheet. The substrate 11 is an optically invariant, optically isotropic, transparent sheet. The preferred thickness of the substrate 11 is from about 1 mm to about 1,5 mm.

Atop the substrate 11 is a film, sheet, or layer 13, e. g., a photoinitiated, polymerized acrylic epoxide sheet. Polymerized, molded, or cast into the polymeric sheet 13 may be grooves. When grooves are present they may have a thickness from about 50 to about 100 nm. The film, sheet, or layer 13 may act as an adhesive, holding the substrate 11 to the encapsulants. It has a thickness of from about 30 to about 200 μm and preferably from about 5 to about 10 μm.

Deposited atop the photo-polymerized sheet 13 is a dielectric barrier layer 21. The dielectric barrier layer 21, for example, of germanium oxide, is from about 50 to about 200 nm thick. The dielectric barrier layer 21 has one or more functions. It serves to prevent oxidizing agents from getting to the chalcogen active layer 31 and prevents the plastic substrate from deforming due to local heating of the chalcogenide layer 31, e.g., during recording or erasing. The barrier layer 21 also serves as an anti-reflective coating, increasing the optical sensitivity of the chalcogenide active layer 31.

Other dielectrics may provide the encapsulating layers 21, 41. For example, the encapsulating layers may be silicon nitride, layered or graded to avoid diffusion of silicon into the chalcogenide layer 31. Alternatively, the encapsulating dielectric layers 21, 41 may be silica, alumina, or other dielectric. Alternatively, the chalcogenide layer may be thick enough to be self encapsulating.

The chalcogenide data storage medium 31 has a thickness

(1) of at least d, where d is the thermal penetration depth described above,
(2) greater than about $d^* = Lambda/4n$, where Lambda is the wave length of the projected beam energy, and n is the index of refraction of the crystalline data storage medium, and
(3) an optical thickness great enough to be substantially optically non-transmissive as described above, and internally reflecting. The thickness of the layer of chalcogenide data storage medium is at least about 200 nm and preferably from about 200 to 400 nm.

Atop the chalcogenide layer 31 and in contact with the opposite surface thereof is a second dielectric layer 41, e.g., a germanium oxide layer. The second dielectric layer 41 when present, may, but need not be of equal thickness as the first layer 21. However, because the herein contemplated thick chalcogenide layer 31 is a good thermal barrier, the second dielectric layer 41 may be omitted. A second photopolymer layer 49 and a second substrate layer 51 are in contact with the opposite surface of the encapsulating layer 41.

The polyacrylate layers 13, 49, are cast or molded in place. These layers 13, 49 can be photo-polymerized in place, e.g., by the application of ultra-violet light. The barrier layers 21, 41, are deposited, by evaporation, for example, of germanium and germanium oxide materials, or by sputtering, including reactive sputtering where the oxygen content of the reactive gas used in reactive sputtering is controlled. The chalcogenide film 31 may be prepared by evaporation, or by sputtering, or by chemical vapor deposition.

The layer of phase changeable chalcogenide material herein contemplated is thicker then the "optical thickness" and "thermal penetration thickness" thereof. The thermal penetration thickness is the maximum distance into the phase changeable chalcogenide, measured from the projected energy beam incident side, that is heated to a temperature high enough to cause vitrification by the projected energy beam. The chalcogenide phase change material beyond the thermal penetration thickness is not vitrified by the projected energy beam. It may, however, be crystallized directly by the beam.

The thermal penetration thickness is a function of the projected energy beam's energy, wavelength and duration. It is also a function of the thermal conductivity, k, and the specific heat, $C_p$ of the chalcogenide material, and of the maximum temperature, $T_m$, attained by the projected energy beam incident side of the chalcogenide phase change.

An approximate theoretical calculation of the thermal penetration thickness may be made using the methods described in William H. McAdams, Heat Transmission, Third Edition, McGraw-Hill Book Company, Inc., New York, NY (1954), at Chapter 3, "Transient Conduction", page 39, "Semi-infinite Solid", in R. Byron Bird, Warren E. Stuart, and Edwin N. Lightfoot, Transport Phenomena, John Wiley & Sons, Inc., New York, NY (1960), at Chapter 11, "Temperature Distributions With More Then One Independent Variable", Example 11.1-1, "Heating of a Semi-Infinite Slab", at page 353-354, and in H.S. Carslaw and J.C. Jaeger, Conduction of Heat In Solids, Second Edition, Oxford University Press (1959), all of which are incorporated herein by reference.

Using the methods described in the above incorporated texts, the thermal penetration thickness, d, may be calculated by assuming (1) a maximum temperature, Tm, at the thermal penetration thickness, d, less then or equal to the melting temperature of the chalcogenide phase change material, (2) a maximum temperature, Ts, at the projected energy beam incident surface of the chalcogenide phase change material, and (3) an initial temperature, To, of the chalcogenide phase change layer, e.g. ambient temperature. These temperatures may be related through a reduced dimensionless "unaccomplished temperature change", Y, which is defined by:

$$Y = \frac{Ts - Tm}{Ts - To}$$

The physical properties of the chalcogenide phase change material are related through the dimensionless number Z, which is defined as

$$Z = \frac{d}{2 \times \text{Square Root (ALPHA} \times \text{THETA})}$$

where

$$\text{alpha} = \frac{\text{Thermal Conductivity}}{\text{Density} \times \text{Specific Heat}}$$

and

theta = projected energy beam pulse duration

Using the above mathematic models and assumed temperature limitations, and following the procedures described in the above incorporated texts, and the graphical solutions, the theoretically predicted thermal energy penetration thickness for a 20 nsec pulse is about 200 nm.

Actual experimental observations have shown that for record pulse widths of about 20 nsec, and record powers of about 1 to 5 milliwatts, a chalcogenide phase change layer thickness of above about 200 to 250 nm is adequate to provide back crystallization, with greater thicknesses being desirable to provide a substantial absence of optical transmissivity through the chalcogenide phase change layer and to act as an encapsulant and/ or dielectric.

In a particularly preferred exemplification of the invention, the energy profile of the projected energy beam means is established or controlled to provide a laterally uniform thermal penetration depth such that crystallization and vitrification occur only within a distance d* of the projected energy beam incident side of the phase change chalcogenide layer. The distance d* is defined by

$$d^* = \frac{\text{Lambda}}{4n}.$$

Lambda is the wavelength of the projected energy beam, and n is the index of refraction of the vitrified phase change chalcogenide material. The thickness d* gives the maximum contrast between written and erased states.

Figures 3a and 3b illustrate the difference in growth pattern between crystal growth in an erased spot in a thin film medium of the prior art and according to the present invention. In Figure 3a, the thickness of the data storage medium layer is on the order of 100 nm. At this thickness, the incident erasing energy beam vitrifies a spot through substantially the whole thickness of the layer. When the spot recrystallizes, crystal growth will proceed from unvitrified crystals which can serve as nucleate sites at the edges the spot. This results in an inward moving crystallization front, i.e., edge growth. With this edge growth pattern, crystallization time will be slow because growth must proceed through the whole diameter of the erased spot.

Figure 3b, the layer of chalcogenide material is much thicker, on the order of 200 to 500 nm. The incident vitrifying pulse vitrifies a spot only partially through the layer, leaving a back layer of crystals surrounding and beneath the well of vitrified material. As the spot recrystallizes, this back layer provides nucleation sites. Since crystal growth is in a direction perpendicular to the diameter of the relatively shallow erased spot, the spot will recrystallize much more quickly. In addition we have found that the orientation of the crystals in the back layer 41 may be controlled such that they all have the same orientation with th tellurium c-axis oriented from film front to back. The orientation of back layer crystals within the chalcogenide film 41 may be controlled techniques, for example, by providing composition gradients in the phase change material layer 41 whereby to provide a graded crystallization temperature, or by providing a seeding layer. For example the crystallization temperature remote from the projected energy beam may be higher then the crystallization temperature on the energy beam incident side of the phase change material layer 41. The gradient may be linear, or discrete.

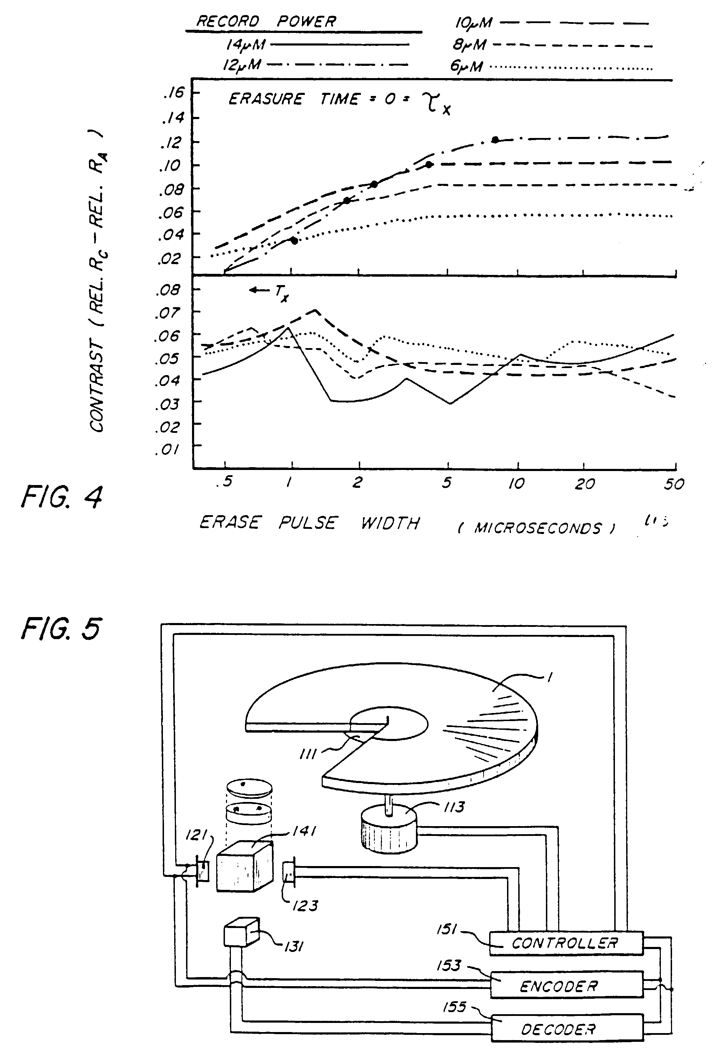

The concomitant improvement in erasure time is illustrated by Figures 4a and 4b where the erase time of thin and thick film phase change layers are shown. In these graphs, the erase pulse width, i.e., time in microseconds, is plotted against the contrast for various record powers. The spot is considered to be erased when the contrast maximizes and levels out. In Figure 4a, where edge growth was the mechanism of erasure in film of phase change material the point of erasure did not occur until between 1 and about 9 microseconds had elapsed. In Figure 4b, where back growth was the postulated mechanism in a 400 nm thick film, the point of erasure was reached before 0,5 $\mu$sec, and the rise and leveling out pattern could not be detected. The erase time was below the ranges ordinarily observed with films 80 to 120 nm thick.

In Figure 5, there is shown an optical data storage system adapted for use with the optical data storage device shown in Figures 1 and 2 and having an optically non-transmissive, chalcogenide, phase changeable data storage medium layer therein. The system includes means for imparting relative motion to the disc 1, as turntable means 111 driven by motor means 113.

The projected beam energy means, e.g., laser means 121 and 123 are controlled by controller means 151 and encoding means 153 when in the "write" and "erase" or "vitrify" and "crystallize" modes. When in the "read" mode the projected beam energy means utilizes photodetector means 131 and decoder means 155, controlled by the controller means, to determine the state of the cell of phase change memory material.

The controller means 151 also includes tracking means for synchronizing the projected beam energy means, the turntable means 111, and the motor means 113.

The projected energy beam switching of the memory material from the first state of relative order to a second state of relative order is carried out under conditions causing the phase transformations to proceed through states of high mobility. According to the invention herein contemplated projected beam energy is applied to the data storage medium 31 illustrated in Figure 2 to change discrete portion of the medium 31 from a solid state having a first relative order, through a relatively high mobility intermediate state, to a solid state of second relative order. The invention further contemplates reversibly applying projected beam energy to the medium 31 to change the discrete portion of the medium 31 from the state of second relative order through a state of relatively high mobility back to the state of first relative order.

Most commonly, this involves vitrifying a discrete portion of the memory medium 31 from a relatively ordered state, for example a crystalline state, through a relatively high mobility state, for example a molten state, to a relatively disordered state, for example, an amorphous state. The discrete portion may then be reversibly switched, for example by crystallization, from the relatively disordered solid state, through a relatively high mobility state, to the relatively ordered solid state, for example, the crystalline state. The high mobility states may be the same state or different states.

The state of first relative order may be a relatively disordered state formed, for example, by a single, relatively high energy, relatively short duration pulse. The melt-quench profile of the relatively high energy short duration pulse is such as to result in a rapid quench rate which quenches in the disorder of the high mobility, e. g., liquid, state. Typically, the single, relatively high energy, relatively short duration pulse has an energy high enough to heat the material above the melting point, but low enough to avoid ablation. The pulse is of short enough duration to avoid significant heating of adjacent areas, thereby allowing relatively rapid cooling from a high mobility, e.g., liquid, state to a relatively disordered solid state. Generally the amount of focussed energy is from about 5 to 20 mW/$\mu$m$^2$, and the duration is less than about 200 to 400 nsec.

Generally, the state of second relative order is a relatively ordered state, for example a crystalline state, a polycrystalline state, or a microcrystalline state. The state of relative order is formed by applying an energy beam comprising a relatively high energy short duration component and a relatively low energy long duration component. The relatively high energy, short duration component should be such as to either singly or in combination with the low energy, long duration component heat the memory cell near, to or above the melting point of the memory material. This should be an energy pulse of from about 5 to about 20 milliwatts per square micron and preferably from about 7 to about 12 milliwatts per square micron. The relatively high energy pulse should have a duration of less than about 400, and preferable less than 200 nsec, for example from about 10 to about 100 nsec. The relatively low energy density long duration pulse has an energy low enough to avoid ablation when used along with the short duration, high energy pulse, but high enough to heat the material to temperatures where crystallization proceeds rapidly. The relatively low energy pulse duration should be such as to foster a slow cooling rate, permitting the crystalline form to nucleate and grow. The low energy density, long duration pulse has a duration of from about 1 to 2 $\mu$sec, and an energy density of from about 1 to 2 mW/$\mu$m$^2$.

This is about one tenth the energy density of the high energy pulse, applied over a period of about ten times longer than the high energy pulse.

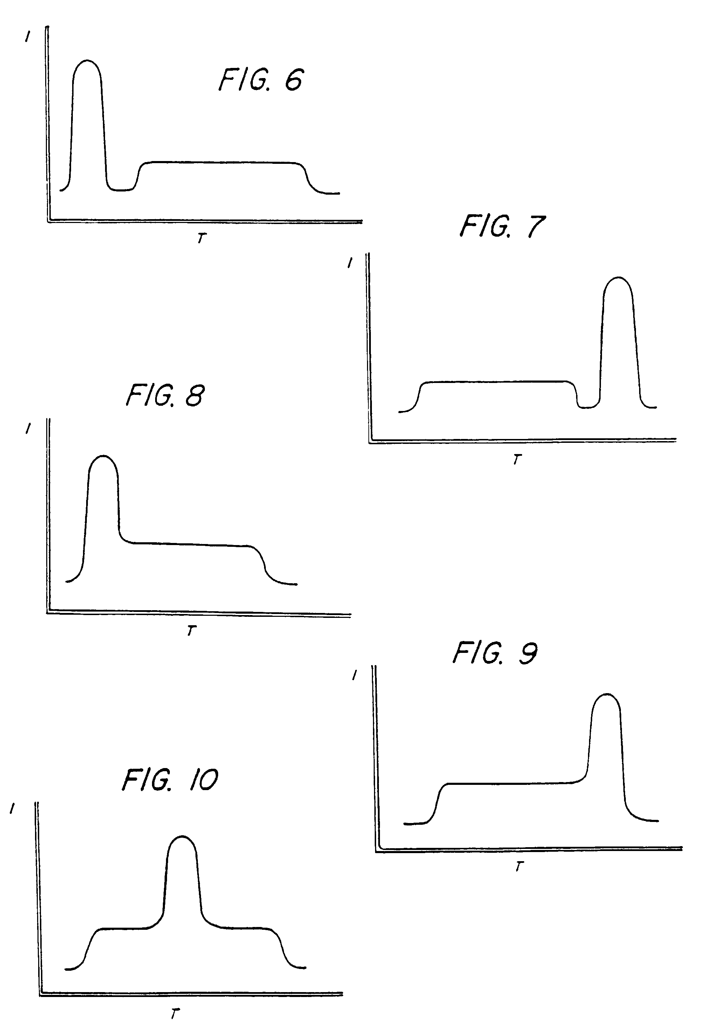

The energy pulses may be sequentially applied, as shown, for example, in Figures 6 and 7. In Figure 6 the high energy pulse precedes the low energy pulse. In Figure 7 the low energy pulse precedes the high energy pulse. The time between pulses is short enough to allow the cumulative thermal effects herein contemplated to arise. That is, the time between pulses is short enough to avoid undue dissipation of heat between pulses, so as to allow for high mobility, intermediate states and subsequent ordered states to form.

According to a further embodiment of the invention the pulses are substantially superimposed. The pulses may be initiated simultaneously as shown in Figure 8. The pulses may be extinguished substantially simultaneously as shown in Figure 9. According to the still further exemplification, shown in Figure 10, the high energy pulse is initiated after the low energy pulse and is extinguished before the low energy pulse is extinguished.

In this way, data is written into the chalcogenide memory medium 31 with a relatively high energy short duration pulse. The data is erased from the chalcogen memory with complex energy beam having (1) a relatively high energy density, short duration component, and (2) a relatively low energy density, long duration component.

According to the invention herein contemplated the recorded state carrier to noise ratio is greater than 38 decibels and the erased state carrier to noise ratio is less than about 6 dB.

There is provided a method of writing data into and erasing data from the projected beam data storage device 1 of Figures 1 and 2. The data storage device has a data storage medium 31 switchable between detectable states by the application of projected beam energy thereto. The data storage system 101 illustrated in Figure 7 is intended for use with the optical data storage device 1.

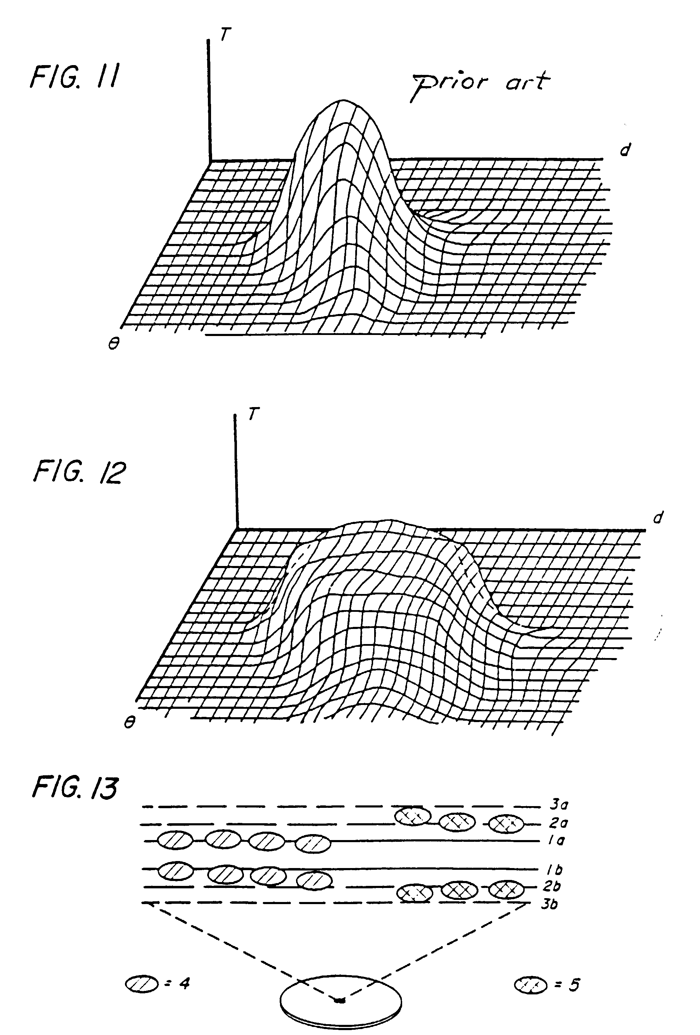

Switching of the material from a state of first relative order to a state of second relative order, and from the state of second relative order to the state of first relative order is effected by the application of projected beam energy. The prior art energy beams have the energy distribution shown in Figure 11. As shown therein, these beams have a Gaussian energy distribution with respect to both time and geometry. Most of the energy is in the center, i.e. it peaks in the center of the track and falls off sharply at the track edges. The energy beams of the invention herein contemplated have the energy distribution shown in Figure 12. As therein shown, the energy distribution with respect to geometry displays a flattened curve instead of the relatively peaked curve of Figure 11. More of the energy falls on the edges of the track and less on the center. The flattening of the energy curve is believed to be accomplished, according to one exemplification, by defocusing the erase energy pulse.

The solid lines 1a and 1b of Figure 13 define the area of the track containing the memory material in a state of first relative order, e.g., written or vitrified state. The width of the track measured between la and 1b is in the range of approximately .9 to 1.0 microns. The broken lines 2a and 2b define the area containing memory material in a state of second relative order, e.g. erased or crystallized state using the method of the prior art. The dotted lines 3a and 3b define the area of the track containing memory material in the state of second relative order, e.g. erased or crystallized state, using the method of the invention herein contemplated. The width of this larger track measured between 3a and 3b in the range of approximately 1,1 to 1,2 $\mu$m. The areas 4 and 5 contain incompletely cycled memory memory material formed, respectively, by the prior art methods and by the method of the invention.

According to the expedient herein contemplated, the width of a track 3a and 3b of the memory medium changed from the state of second relative order to the state of first relative order is wider than a track 1a and 1b of the memory medium changed from the state of first relative order to the state of second relative order. The wider second track 3a and 3b is sufficiently wider than the first track 1a and 1b so that any areas of incompletely cycled memory materials 5 in the form of, for example, ring-like or crescent shaped areas, lie substantially outside of the area of the narrow first track 1a and 1b.

It is preferred to project beam energy to a memory medium to change a relatively narrow first track of the medium from a state of first relative order to a state of second relative order. Thereafter, projected beam energy is applied to the medium to change a second track of the medium which is sufficiently wider than the relatively narrow first track, and encompasses said first track, from the state of second relative order to the state of first relative order. In this way, substantially all areas of the incompletely cycled memory medium contained within the wider second track occur near or contiguous to the outside boundary of said second track, and thereby lie outside of the area of the narrow first track.

Projected beam energy of a relatively narrow beam width is applied to the medium to change it from a state of first relative order to a state of second relative order. The term "beam width," as used in the optical data storage art is generally understood to mean the width of the spot size created by the beam as it impinges on the memory material. It is preferred to apply projected beam energy of a beam width wider than that of the relatively narrow beam width to the medium to change it from the state of second relative order to the state of first relative order. The wider energy beam is sufficiently wide that any discrete areas of memory material 5 which lie in its path and substantially contiguous to the discrete area impinged upon by the narrow beam width energy beam are switched to the state of first relative order.

Data is written into the memory medium with a substantially focused energy pulse and erased from the memory medium with a slightly defocused second energy pulse 2. The areas of the track erased by the defocused second energy pulse 2 include both (a) completely cycled regions and (b) incompletely cycled regions 5 impinged upon by the defocused energy beam, which lie substantially outside the discrete areas written on by the relatively focused energy beam.

In another particularly preferred exemplification, the projected energy beam source is a laser. It is defocused by gating in an external voltage to the focus servo tracking system of the laser. This focus offset is applied only during the erase cycle.

The spot can be enlarged by using a final objective lens of low effective numerical aperture as seen by the erase laser beam.

The energy distribution profile can be modified by selecting the $TEM_{01*}$, $TEM_{01}$, or $TEM_{11}$ modes of the laser, as known in the field of laser art.

The profile of the energy can be altered by interrupting the optical path. The focused energy beam shape can be altered by offsetting the collimating lens so that the beam will not emerge sharply focused.

It can be defocused by use of a mechanical means, e.g., a shim, and its energy distribution profile can be modified by splitting the beam by means, for example, of a difraction grating, and aligning the centers of the split beam along the edges of the record track.

The methods of modifying the energy distribution profile of the erase beam enumerated above may be used singly or in any combination thereof.

In a working example of a preferred expedient of the invention, the optical memory medium disk that was tested had a carrier/noise ratio in the write state of 38-40 dB and a depth of erasability of approximately 18 to 20 dB when erased by the method of the prior art. The same test disk erased with a defocused laser beam of the same laser output power achieved a 3 to 4 dB improvement in depth of erasability over the prior art.

## Claims

1. Method of writing data and erasing data in a phase changeable data memory medium layer (31) supported by a substrate (11) which memory medium layer (31) comprises chalcogen material capable to be changed, by projected beam energy, from a first state to a second state and vica versa,
   **characterized in that**
   a multicomponent beam is used so that data is written into said memory medium layer (31) by a relatively high energy short duration pulse changing the respective part of said layer material into a more disordered state while data is erased from said memory medium layer (31) by a combination of a relatively high energy, short duration beam with a relatively low energy, long duration beam changing the respective part of said layer material into a more ordered and generally crystalline state including poly- and microcrystalline states.

2. Method as claimed in claim 1,
   **characterized in that**
   said beams of said combination are sequentially applied.

3. Method as claimed in claim 1,
   **characterized in that**
   said beams of said combination are substantially simultaneously applied.

4. Method as claimed in claim 1 - 3,
   **characterized in that**
   the data is written by a relatively narrow beam or a substantially focused energy pulse and the data is erased by a relatively wide beam or a substantially defocused energy pulse.

## Patentansprüche

1. Verfahren zum Einschreiben und Löschen von Daten in einer phasenänderbaren Datenspeichermediumschicht (31), die von einem Substrat (11) getragen wird, wobei die Speichermediumschicht (31) ein Chalkogenmaterial aufweist, das durch projizierte Strahlenergie aus einem ersten Zustand in einen zweiten Zustand verändert werden kann und umgekehrt,
   **dadurch gekennzeichnet**,
   daß ein Mehrkomponentenstrahl verwendet wird, so daß die Daten durch einen relativ hochenergetischen Impuls mit kurzer Dauer in die Speichermediumschicht (31) eingeschrieben werden, der den jeweiligen Teil des Schichtmaterials in einen ungeordneteren Zustand ändert, während die Daten durch eine Kombination eines relativ hochenergetischen Strahls mit kurzer Dauer mit einem relativ niederenergetischen Strahl mit langer Dauer aus der Speichermediumschicht (31) gelöscht werden, wodurch der jeweilige Teil des Schichtmaterials in einen geordneteren und allgemein kristallinen Zustand mit poly- und mikrokristallinen Zuständen geändert wird.

2. Verfahren nach Anspruch 1,
   **dadurch gekennzeichnet**, **daß**
   die Strahlen der Kombination sequentiell angelegt werden.

3. Verfahren nach Anspruch 1,
   **dadurch gekennzeichnet**, **daß**
   die Strahlen der Kombination im wesentlichen gleichzeitig angelegt werden.

**4.** Verfahren nach Anspruch 1 - 3,
**dadurch gekennzeichnet**, **daß**
die Daten durch einen relativ schmalen Strahl oder einen im wesentlichen fokussierten Energieimpuls eingeschrieben werden und durch einen relativ breiten Strahl oder einen im wesentlichen defokussierten Energieimpuls gelöscht werden.

**Revendications**

**1.** Procédé d'écriture de données et d'effacement de données dans une couche (31) d'un milieu de mémoire de données à changement de phase supportée par un substrat (11), la dite couche (31) du milieu de mémoire comprenant un matériau chalcogène capable de passer, par un faisceau d'énergie projeté, d'un premier état à un second état et vice et versa,
caractérisé en ce que
on utilise un faisceau à composants multiples de façon que la donnée soit écrite dans la dite couche (31) de milieu de mémoire par une impulsion de relativement forte énergie et faible durée, faisant passer la partie respective du dit matériau de la couche à un état plus désordonné, tandis que la donnée soit effacée de la dite couche (31) du milieu de mémoire par une combinaison d'un faisceau de relativement forte énergie et faible durée et d'un faisceau de relativement faible énergie et longue durée faisant passer la partie respective du dit matériau de la couche à un état plus ordonné et généralement cristallin, incluant les états policristallins et microcristallins.

**2.** Procédé selon la revendication 1,
caractérisé en ce que
les dits faisceaux de la dite combinaison sont appliqués de façon séquentielle.

**3.** Procédé selon la revendication 1,
caractérisé en ce que
les dits faisceaux de la dite combinaison sont sensiblement appliqués pour l'essentiel de façon simultanées.

**4.** Procédé selon la revendication 1 à 3,
caractérisé en ce que
la donnée est écrite par un faisceau relativement étroit ou par une impulsion d'énergie substantiellement concentrée, et la donnée est effacée par un faisceau relativement large ou par une impulsion d'énergie substantiellement déconcentrée.

FIG. 1

FIG. 2

FIG. 3

A.

EDGE
GROWTH

$d_A$

B.

BACK
GROWTH

FIG. 4

FIG. 5

FIG. 6

FIG. 7

FIG. 8

FIG. 9

FIG. 10

FIG. 11

T

prior art

d

θ

FIG. 12

T

d

θ

FIG. 13

3a
2a
1a

1b
2b
3b

⊘ = 4

⊗ = 5